Europäisches Patentamt

European Patent Office

Office européen des brevets

(11) Veröffentlichungsnummer: **0 338 100 B1**

## (12) EUROPÄISCHE PATENTSCHRIFT

(45) Veröffentlichungstag der Patentschrift: **02.09.92**

(51) Int. Cl.⁵: **B65G 9/00**

(21) Anmeldenummer: **88106154.3**

(22) Anmeldetag: **18.04.88**

(54) **Fördersystem.**

(43) Veröffentlichungstag der Anmeldung:
**25.10.89 Patentblatt 89/43**

(45) Bekanntmachung des Hinweises auf die
Patenterteilung:
**02.09.92 Patentblatt 92/36**

(84) Benannte Vertragsstaaten:
**AT CH DE FR GB IT LI**

(56) Entgegenhaltungen:
**DE-C- 159 022**
**DE-C- 3 318 381**
**DE-U- 8 535 331**

(73) Patentinhaber: **VEIT TRANSPO GMBH**
**Rudolf-Diesel-Strasse 3**
**W-8910 Landsberg/Lech(DE)**

(72) Erfinder: **Richter, Peter, Dipl.Ing.**
**Rossmarkt 194**
**W-8910 Landsberg(DE)**
Erfinder: **Hafner, Josef, Dr.-Ing.**
**Wettersteinstr. 12**
**W-8910 Landsberg(DE)**
Erfinder: **Schönenberger, Rolf, Dipl.Ing.**
**Wettersteinstr. 28**
**W-8910 Landsberg(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung bezieht sich auf ein Fördersystem, insbesondere ein Hängefördersystem, der im Oberbegriff von Anspruch 1 erläuterten Art.

Ein derartiges Fördersystem ist aus der DE-C-159 022 bekannt. Das bekannte Fördersystem enthält Grubenwagen, die auf Schienen auf dem Erdboden laufen. Die Grubenwagen sind miteinander über eine zwei Haken aufweisende Kupplung gekoppelt. Die Haken sind über eine drehbare Stange direkt mit dem jeweils zugeordneten Grubenwagen verbunden. Die Stange enthält einen Handgriff, mit der jeder Haken mit seiner Hakenöffnung in einen Eingriff mit der Stange des gegenüberliegenden Grubenwagens, bzw. zum Entkoppeln aus diesem Eingriff gedreht werden kann. Die Stange ist durch eine Doppelfeder belastet, die den Haken sowohl in der Eingriffstellung mit der gegenüberliegenden Stange als auch in einer unwirksamen Stellung festhält, in der der Haken um 90° gegenüber der Eingriffsstellung hinter die Begrenzungskanten des Grubenwagens verschwenkt wurde. Beide Haken der Kupplung sind mit Vorsprüngen versehen, die miteinander in Eingriff treten, wenn die Grubenwagen geschoben werden, so daß die Stirnflächen der Grubenwagen nicht gegeneinander schlagen. Die bekannte Kupplung ist zwar einfach aufgebaut, eignet sich jedoch lediglich für Fördersysteme, die keine oder nur großräumige Kurven aufweisen. Wird beispielsweise im Schubbetrieb eine Kurve mit einem relativ engen Radius durchfahren, so bewegen sich die federbelasteten Kupplungshaken mit dem zugeordneten Wagen tangential zur Kurve, so daß der Eingriff mit der gegenüberliegenden Stange gelöst wird, falls beispielsweise in der Kurve von Schub- auf Zugbetrieb umgestellt wird. Vertikale Kurven, zumindest solche mit kleineren Kurvenradien, bergen ebenfalls die Gefahr einer Entkopplung sogar im Zugbetrieb.

Aus der DE-OS 33 18 381 ist ein Hängefördersystem mit einer Kupplungsvorrichtung der genannten Art bekannt. Jedes Kupplungsteil der bekannten Kupplungsvorrichtung enthält zwei Haken, die mit ihren Hakenspitzen seitlich umeinandergreifen. Die Haken sind außermittig an der ihnen jeweils zugeordneten Transporteinheit derart angeordnet, daß beim geradlinigen Aufeinandertreffen zweier zu kuppelnder Transporteinheiten die ihnen jeweils zugeordneten Haken an der der Hakenspitze benachbarten Außenfläche aufeinandertreffen. Um bei dieser Stellung der Haken ein- und auskuppeln zu können, müssen die Transporteinheiten in seitlicher Richtung gegeneinander versetzt werden, was bei vollbeladenen Transporteinheiten manchmal auf Schwierigkeiten stoßen kann. Die bekannte Kupplungsvorrichtung ist weiterhin nur dann zuverlässig wirksam, wenn die Transporteinheiten gezogen werden. Wird geschoben, so bewegen sich die beiden Haken in Schieberichtung relativ zueinander, bis der Scheitelpunkt jedes Hakens am Basisteil an der Stirnseite der gegenüberliegenden Transporteinheit anstößt. In dieser Stellung weisen die Hakenspitzen zwangsläufig einen Abstand in Förderrichtung zueinander auf, wobei ein geringer seitlicher Versatz quer zur Förderrichtung einer oder beider Transporteinheiten zueinander zum Auskuppeln führt. Ein solcher seitlicher Versatz wird beispielsweise bereits beim Durchfahren einer horizontalen Kurve erreicht. Darüber hinaus ist ein Kuppeln der bekannten Kupplungsvorrichtung nicht mehr möglich, wenn einer der Haken bei einem etwas harten Aufprall beim selbsttätigen Einkuppeln beschädigt wurde oder zu Bruch gegangen ist.

Der Erfindung liegt die Aufgabe zugrunde, ein Fördersystem der genannten Art bereitzustellen, das bei einfachstem Aufbau auch im Schubbetrieb und in Kurven zuverlässig funktioniert.

Die Aufgabe wird durch die kennzeichnenden Merkmale des Anspruches 1 gelöst.

Durch die erfindungsgemäße Anordnung des Hakens über ein Basisteil mit den angegebenen Bewegungsmöglichkeiten relativ zur Transporteinheit wird bei einer noch verhältnismäßig einfachen Konstruktion eine wesentlich bessere Kurvengängigkeit, und zwar sowohl im Schub- als auch im Zugebetrieb erreicht. Durch diese Ausgestaltung können sich beide Haken parallel zueinander als Sehne sehr eng in den Kurvenbogen legen, so daß die im Stand der Technik zu beobachtende winklige Verdrehung der Haken einer Kupplung zueinander in vertikalen oder horizontalen Kurven nicht mehr auftreten kann. Darüber hinaus kann zumindest eine behelfsmäßige Kupplung erreicht werden, selbst wenn einer der Haken nicht mehr funktionsfähig sein sollte.

Durch die Ausgestaltung nach Anspruch 2 kann die Wirkung der Schwerkraft auf den Ein- und Auskuppelvorgang eliminiert werden. Außerdem wird dadurch und durch die Ausgestaltung nach Anspruch 3 die Kupplung symmetrisch, so daß die Transporteinheiten richtungsunabhängig gekuppelt werden können, d.h. keine der beiden Stirnseiten der Transporteinheit muß unbedingt vorn und keine der beiden Stirnseiten unbedingt hinten liegen.

In der Ausgestaltung nach Anspruch 4 können die Haken selbsttätig in den eingekuppelten Zustand überführt werden, wenn die Transporteinheiten aneinander anstoßen.

Die Ausgestaltung nach Anspruch 5 dient dem einfachen und zweckmäßigen Lösen der Kupplung, wobei das Entkuppeln durch die Maßnahmen nach den Ansprüchen 6 und/oder 7 automatisiert werden kann.

Anspruch 8 beschreibt eine Möglichkeit, zwei Transporteinheiten auch dann zu kuppeln, wenn ihre Mittellinien seitlich gegeneinander versetzt sind.

Durch die Maßnahmen nach Anspruch 9 wird sichergestellt, daß die beiden Haken nicht über die Kuppelstellung hinaus gegeneinander geschoben werden können, wobei sie möglicherweise beschädigt würden.

Anspruch 10 beschreibt eine Möglichkeit, zwei Transporteinheiten auch dann zu kuppeln, wenn sie in vertikaler Richtung zueinander versetzt sind.

Durch das in Anspruch 11 angegebene Spiel wird die Kurvengängigkeit weiter verbessert. Darüberhinaus wird durch dieses Spiel auch ein manuelles Anfahren erleichtert, da zunächst die Haftreibung einer Transporteinheit überwunden werden muß, bevor die nachfolgende, angekoppelte Transporteinheit angezogen werden muß.

Die Ausgestaltung nach Anspruch 12 verbessert insbesondere die Kurvengängigkeit in vertikalen Kurven.

Die Ausgestaltung nach Anspruch 13 verbessert insbesonders die Kurvengängigkeit in horizontalen Kurven.

Die Ausgestaltung nach Anspruch 14 stellt sicher, daß die Kupplung auch durch Schub nicht ausknickt.

Anspruch 15 beschreibt eine baulich und konstruktiv besonders bevorzugte Ausgestaltung des Basisteils, die sich besonders für die in Anspruch 16 angegebenen Anordnungen der Leit- und Anschlagflächen eignet.

Durch die Maßnahme nach Anspruch 17 kann der Anfang und das Ende eines aus einzelnen Transporteinheiten bestehenden Transportzuges derart definiert werden, daß sich keine andere Transporteinheit unbeabsichtigt ankuppeln kann, selbst wenn deren Kupplungsteil sich in kupplungsfähigem Zustand befindet.

Anspruch 18 beschreibt eine besonders bevorzugte konstruktive Lösung für eine derartige Sperrstellung.

Durch die Ausgestaltung nach Anspruch 19 können die Kupplungsteile relativ einfach und preisgünstig als Spritzteile hergestellt werden. Darüberhinaus wird eine gewisse innere Elastizität der Teile erreicht, die einerseits Brüche vermeiden hilft und andererseits auch, beispielsweise zur Gestaltung der Sperrstellung, eine einwandfreie Funktion sicherstellt.

Durch die Ausgestaltungen nach den Ansprüchen 20 und 21 wird die Montage wesentlich erleichert.

Ein Ausführungsbeispiel der Erfindung wird nachfolgend anhand der Zeichnungen näher beschrieben.

Es zeigen:

Fig.1    eine perspektivische, schematische Darstellung zweier sich mit ihren Kupplungsteilen gegenüberliegender Transporteinheiten des erfindungsgemäßen Fördersystems,

Fig.2    eine Seitenansicht des Hakens der Kupplung nach Fig.1,

Fig.3    eine Draufsicht auf Figur 2,

Fig.4    eine Seitenansicht des Basisteils der Kupplung nach Fig.1,

Fig.5    eine Draufsicht auf Figur 4,

Fig.6    einen Querschnitt entlang VI-VI aus Fig.1 mit anhängendem Betriebsmittel,

Fig.7    eine Kupplung in gekuppeltem Zustand,

Fig.8    die zwei Kupplungsteile einer Kupplung in mittiger Lage vor dem Einkuppeln,

Fig.9    zwei in einer Richtung seitlich gegeneinander versetzte Kupplungsteile vor dem Einkuppeln,

Fig.10   zwei in der anderen Richtung seitlich versetzte Kupplungsteile vor dem Einkuppeln,

Fig.11   zwei vertikal zueinander versetzte Kupplungsteile vor dem Einkuppeln,

Fig.12   zwei nicht kupplungsfähige Kupplungsteile,

Fig.13   eine schematische Darstellung des Fördersystems beim Durchfahren horizontaler Kurven,

Fig.14   eine schematische Darstellung beim Durchfahren vertikaler Kurven, und

Fig.15   eine schematische Darstellung einer Entkupplungsvorrichtung.

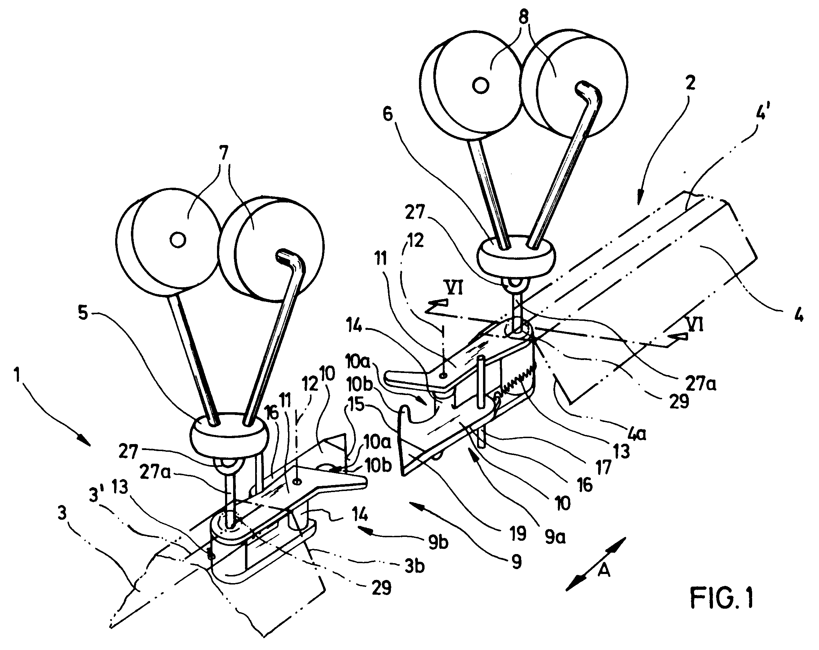

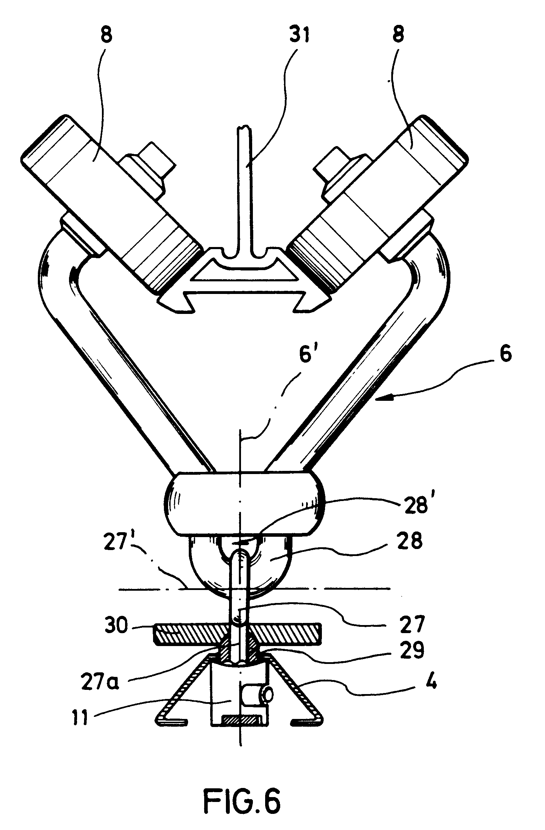

Aus Figur 1 sind die Enden zweier Transporteinheiten 1 und 2 ersichtlich, wie sie beispielsweise für Hängefördersysteme verwendet werden. Die Transporteinheiten 1, 2 weisen üblicherweise eine Quertraverse 3, 4 auf, die aus Gründen der Übersichtlichkeit nur strichpunktiert dargestellt wurden. die Quertraversen 3 oder 4 können, wie dargestellt, aus einem Schienenstück mit trapezförmigem Profil bestehen, auf dem die zu fördernden Gegenstände aufgehängt werden. Beide Enden der Quertraversen 3 und 4 sind jeweils mit einem Betriebsmittel versehen, von denen nur die Betriebsmittel 5 und 6 dargestellt sind, die in der Nähe der einander zugewandten Stirnseiten der Quertraversen 3, 4, d.h, bei einer angenommenen Förderrichtung nach links in Figur 1 an der rückwärtigen Stirnseite 3b der Quertraverse 3 und der nach vorn weisenden Stirnseite 4a der Quertraverse 4, angeordnet sind. Jedes der Betriebsmittel 5, 6 weist ein Paar von Rollen 7,8 auf, die in üblicher Weise auf eine Laufschiene 31 aufgeschoben (vgl. Figur 6) und auf ihr in mittenabgehängter Position des Betriebsmittels abrollen können.

Zwischen den einander zugewandten Stirnseiten 3b und 4a der Quertraversen 3 und 4 ist eine Kupplung 9 vorgesehen, die aus zwei identisch ausgebildeten Kupplungsteilen 9a und 9b besteht. Identisch ausgebildete Kupplungsteile befinden sich auch an der in Figur 1 nicht dargestellten vorderen Stirnseite der Quertraverse 3 bzw. hinteren Stirnseite der Quertraverse 4. In Draufsicht auf die Stirnseiten der Quertraverse 3, 4 befinden sich alle Kupplungsteile in identischer Anordnung zu einem Fixpunkt, der in Figur 1 beispielsweise durch Längs-Mittellinien $3'$ bzw. $4'$ durch die Firste der Quertraversen 3 und 4 definiert wurde.

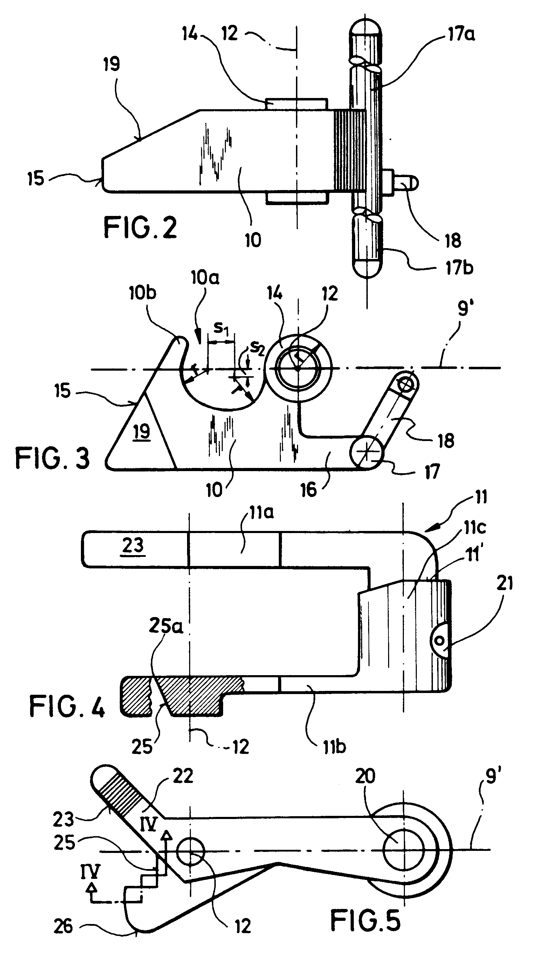

Jedes Kupplungsteil 9a, 9b weist den gleichen, in den Figuren 2 und 3 näher dargestellten Haken 10 und das gleiche, in den Figuren 4 und 5 näher dargestellte Basisteil 11 auf. Die Haken 10 der Kupplungsteile 9a bzw. 9b einer Kupplung 9 sind mit seitwärts und gegeneinander gerichteten Hakenöffnungen 10a angeordnet. In Verbindung mit der oben beschriebenen Anordnung bezüglich der Quertraversen ist die Kupplung 9 somit symmetrisch, d.h., daß beispielsweise die Transporteinheit 2 auch dann an die Transporteiheit 1 angekuppelt werden kann, wenn der Stirnseite 3b die nicht dargestellte rückwärtige Stirnseite der Quertraverse 4 gegenüberliegt.

Der Haken 10 ist um eine Drehachse 12 gegen die Kraft einer Feder 13 verdrehbar. Die Hakenöffnung 10a ist an der der Stirnseite 3b bzw. 4a abgewandten Seite der Drehachse 12 durch eine Hakenspitze 10b und auf der anderen Seite durch eine Nabe 14 begrenzt, die koaxial mit der Drehachse 12 verläuft. Dabei bildet die Nabe 14 des Kupplungsteiles 9a einen Rastteil für die Hakenöffnung 10a des Kupplungsteils 9b und die Nabe 14 des Kupplungsteiles 9b einen Rastteil für die Hakenöffnung 10a des Kupplungsteiles ga. An der Stirnseite jedes Hakens 10 befindet sich eine im wesentlichen vertikale Auflauffläche 15, die sich von der Hakenspitze 10b in der Nähe der zugeordneten Quertraverse 3 bzw. 4 schräg nach vorn in Richtung auf die andere, nicht zugeordnete Quertraverse 4 bzw. 3 erstreckt.

An der der Hakenöffnung 10a ab- und der jeweils zugeordneten Quertraverse 3 bzw. 4 zugewandten Seite der Drehachse 12 enthält jeder Haken einen Lösehebel 16, mit dem der Haken zum Lösen der Kupplung verschwenkt werden kann. Zum automatischen Auskuppeln ist jeder Lösehebel 16 mit einem Betätigungsteil 17 versehen, das als Stift ausgebildet ist, der sich mit einer oberen Verlängerung 17a nach oben und einer unteren Verlängerung 17b nach unten über den Haken 10 hinauserstreckt. Die Funktionen des Betätigungsteiles 17 werden weiter unten noch näher erläutert. Am Lösehebel 16 ist weiterhin ein schräg nach innen weisender Haltesteg 18 vorgesehen, an dem ein Ende der Feder 13 befestigt ist.

Der Haken 10 weist weiterhin in seinem am weitesten in Richtung auf die benachbarte Quertraverse 3 bzw. 4 vorstehenden Bereich eine nach vorn abfallende Leitfläche 19 auf.

Wie aus den Fig.1 und 3 ersichtlich, ist die Hakenöffnung 10a im wesentlichen U-förmig ausgebildet und weist am Grund zwei Ausrundungen auf. Die Radien r der Ausrundungen sind untereinander gleich und gleich dem Radius r der äußeren Umfangsfläche der Nabe 14. Die Mittelpunkte der Ausrundungen der Hakenöffnung 10a liegen in einem Abstand $s_1$ in Förderrichtung hintereinander, die zu Darstellungszwecken durch eine durch die Drehachse 12 geführte Mittellinie $9'$ repräsentiert werden soll. Dabei liegt der Mittelpunkt der der Hakenspitze 10b zugewandten Ausrundung auf dieser Mittellinie $9'$. Der Mittelpunkt der der Nabe 14 zugewandten Ausrundung kann, wie dargestellt, mit einem Abstand $s_2$ zum ersteren Mittelpunkt senkrecht zur Mittellinie $9'$ tiefer im Inneren der Hakenöffnung 10a oder ebenfalls auf der Mittellinie $9'$ liegen. Wie insbesondere Figur 2 zeigt, steht die Nabe 14 ober- und unterhalb des Hakens 10 vor.

Wie aus den Figuren 1, 4 und 5 ersichtlich, ist das Basisteil 11 gabelförmig ausgebildet und über- bzw. untergreift den Haken 10 mit einem oberen Steg 11a und einem unteren Steg 11b, die über ein rückwärtiges Verbindungsstück 11c miteinander verbunden sind. Der Abstand zwischen den Stegen 11a, 11b ist größer als die Höhe des Hakens 10. Im Verbindungsstück 11c ist eine Bohrung 20 zur Befestigung des Basisteiles 11 an der zugeordneten Quertraverse 3 bzw. 4 und eine Anlenkstelle 21 für das andere Ende der Feder 13 vorgesehen. Die Drehachse 12 ist in Form eines Stiftes in den dem Verbindungsstück 11c abgewandten, freien Enden des oberen und des unteren Steges 11a bzw. 11b angeordnet, wobei sowohl die Drehachse 12 als auch der Mittelpunkt der Bohrung 20 auf der Mittellinie $9'$ liegen. Der obere Steg 11a weist in seinem vorderen Bereich einen Auslegersteg 22 auf, der an seiner nach vorn weisenden Seite eine im wesentlichen vertikale Leitfläche 23 trägt. Die Leitfläche 23 erstreckt sich von der Mittellinie $9'$ nach schräg seitlich vorn und ist ein Stück nach hinten über der Mittellinie $9'$ hinaus verlängert. Die der Leitfläche 23 anliegende, dem unteren Steg 11b zugewandte Kante und die Unterseite des Auslegersteges 22 ist als Anschlagfläche 24 ausgebildet.

Eine weitere Anschlagfläche 25 findet sich im vorderen Bereich des unteren Steges 11b. Die Anschlagfläche 25 verläuft, wie der in Figur 4 dargestellte Schnitt IV-IV aus Figur 5 zeigt, nach unten hinten, wobei sich an der dem Haken 10 zugewandten oberen Seite des unteren Steges 11b eine unter einem spitzen Winkel verlaufende Kante 25a ausbildet. Der untere Steg 11b enthält weiterhin einen Rastnocken 26, dessen Scheitelfläche einen Abstand zur Drehachse 12 aufweist, der geringfügig größer ist als der Abstand der der Nabe 14 zugewandten inneren Fläche der unteren Verlängerung 17b des Betätigungsteiles 17, so daß dieses unter Rasteingriff über den Scheitelpunkt des Rastnockens 26 geführt werden muß.

Wie aus den Figuren 1 und 6 ersichtlich, ist das Basisteil 11 mit einer Befestigungsöse 27 starr verbunden, deren Schaft 27a bevorzugt in die Bohrung 20 eingeschraubt bzw. durchgesteckt und mit einer Gegenmutter gesichert ist. Die Befestigungsöse 27 ist mit ihrer Ösenöffnung so angeordnet, daß eine Mittelachse 27$'$ durch die Ösenöffnung 27 im wesentlichen senkrecht zur Mittellinie 9$'$ der Kupplungsteile 9a bzw. 9b verläuft. In die Befestigungsöse 27 greift eine am Betriebsmittel 5 bzw. 6 angeordnete Öse 28 ein. Die Abmessungen der Ösen 27 und 28 sind derart aufeinander abgestimmt, daß sich das Betriebsmittel 5 bzw. 6 sowohl um die Mittelachse 27$'$ der Ösenöffnung der Befestigungsöse 27 als auch um eine parallel zur Mittellinie 9$'$ verlaufende Mittelachse 28$'$ der Öse 28 drehen kann. Der Innendurchmesser und die Form der Befestigungsöse 27 sowie die Materialstärke bzw. die Form des die Öse 28 bildenden Ringes sind jedoch so aufeinander abgestimmt, daß das Betriebsmittel 5 bzw. 6, bis auf ein geringfügiges Spiel, gegen eine Verdrehung um die Symmetrieachse 6$'$ des Betriebsmittels gesichert ist.

Die Quertraversen 3 bzw. 4 liegen zwischen dem Basisteil 11 und der Befestigungsöse 27 im wesentlichen lose auf einer Absatzfläche 11$'$ des Basisteils 11 auf, wobei sich der Schaft 27a durch eine Öffnung 29 in der Quertraverse 3, 4 erstreckt. In der Öffnung 29 können sich der Schaft 27a mit dem Basisteil 11 und nach Überwindung des oben beschriebenen Spiels mit dem Betriebsmittel 5 bzw. 6 auch die Rollen 7 bzw. 8 um die Achse 6$'$ frei gegenüber der Quertraverse 3 bzw. 4 verdrehen. Durch den Schaft 27a der Befestigungsöse 27 wird weiterhin ein Pufferteil 30 lagefixiert, das als Anschlag für auf der Quertraverse 3 bzw. 4 angeordneten Halterungen für die zu transportierenden Gegenstände dient.

Zweckmäßigerweise ist einer der Stege 11a, 11b, bevorzugt der obere Steg 11a, des Basisteils 11 schmaler als die Öffnung 29, so daß das Basisteil 11 einstückig hergestellt werden kann. Bei der Montage wird dann zunächst das Basisteil 11 ohne Haken 14 mit seinem schmalen Steg durch die Öffnung 29 gesteckt. Danach wird die bereits am Betriebsmittel 5 bzw. 6 angeordnete Befestigungöse 27 bei 20 in das Basisteil 11 eingeschraubt, wobei die Befestigungsöse 27 gleichzeitig das Pufferteil 30 derart befestigt, daß sich die Quertraverse 3, 4 zwischen der Absatzfläche 11$'$ und dem Pufferteil 30 verkippen kann. Dann wird der Haken 14 mit Hilfe des als Drehachse 12 dienenden Stiftes im Basisteil 11 verankert und die Feder 13 angebracht.

Nachstehend wird das Ein- und Auskuppeln der Kupplung 9 des erfindungsgemäßen Fördersystems beschrieben:

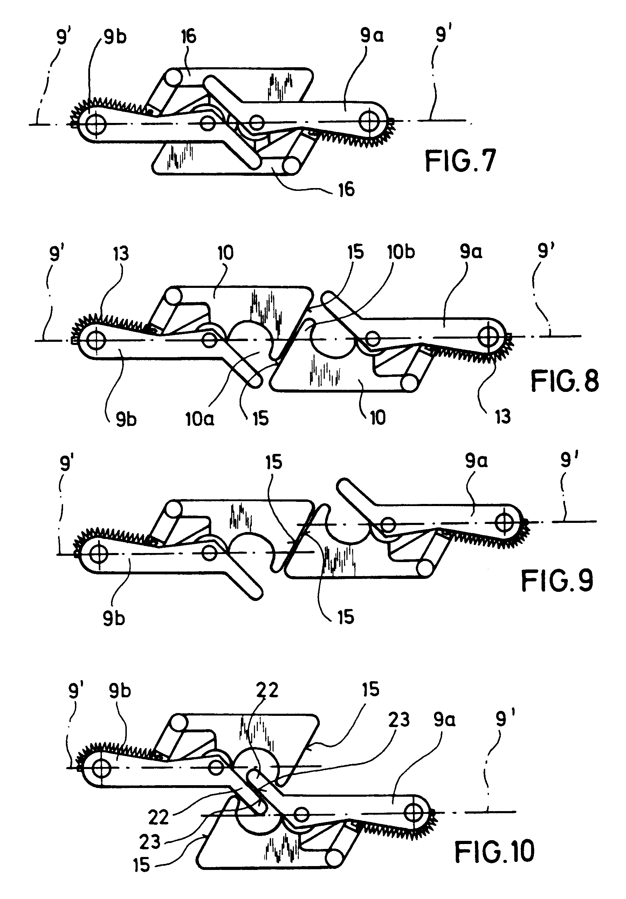

Werden die beiden in Figur 1 dargestellten Transporteinheiten 1 und 2 in Richtung des Pfeiles A gegeneinander geführt, wobei im Idealfall die Mittellinien 9$'$ beider Kupplungsteile 9a bzw. 9b miteinander fluchten, so schlagen die Auflaufflächen 15 an der Stirnseite beider Haken 10, wie in Figur 8 dargestellt, aufeinander. Die Auflaufflächen 15 beider Haken gleiten aufeinander ab, was bewirkt, daß sich die Haken mit den Hakenspitzen 10b nach außen gegen die Kraft der Feder 13 um ihre jeweiligen Drehachsen 12 verschwenken. Dadurch bewegen sich zunächst die Hakenspitzen 10b übereinander weg, schlagen an die Nabe 14 des gegenüberliegenden Kupplungsteiles 9a bzw. 9b an, werden nochmals ausgelenkt und übergreifen danach die gegenseitigen Naben, so daß diese im Inneren der Hakenöffnungen 10a zu liegen kommen. Dieser eingekuppelte Zustand ist in Figur 7 dargestellt.

Figur 9 zeigt den Anfangszustand beim Einkuppeln, wenn die Mittellinien 9$'$ beider Kupplungsteile 9a bzw. 9b in horizontaler Richtung gegeneinander versetzt sind, was im Praxisbetrieb, beispielsweise durch eine ungleichmäßige Beladung, durchaus passieren kann. Innerhalb eines bestimmten Bereiches der seitlichen Versetzung schlagen die Auflaufflächen 15 in bereits beschriebener Weise auch bei einer solchen Versetzung noch soweit aneinander, daß das ausgelenkte Kupplungsteil in die korrekt ausgerichtete Lage seiner Mittellinie 9$'$ zurückgezwungen wird, woraufhin dann der Einkuppelvorgang wie beschrieben stattfinden kann.

In Figur 10 ist eines der beiden Kupplungsteile soweit nach der anderen Seite ausgelenkt, daß sich die Auflaufflächen 15 nicht mehr berühren können. In diesem Falle fahren die Transporteinheiten noch weiter aufeinander zu, bis sich die in Fahrtrichtung hinter den Auflaufflächen 15 befindenden Leitflächen 23 an den Auslegestegen 22 beider Kupplungsteile 9a, 9b berühren. Dadurch wird das ausgelenkte Kupplungsteil wieder in die korrekte Ausrichtung beider Mittellinien 9$'$ zueinander gezwungen, wobei durch die Anordnung der Leitflächen 23 relativ gesehen hinter den Auflaufflächen 15 jede der Hakenspitzen 10b sofort an die Nabe 14 des Gegenteiles anstößt, von ihr ausgelenkt wird und in die gekuppelte Stellung zurückfällt.

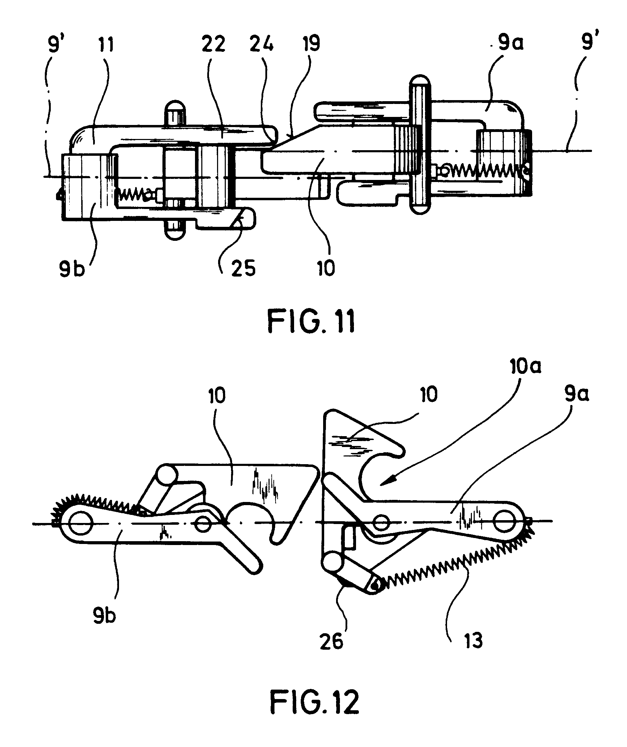

Sind beide Mittellinien 9$'$, wie Figur 11 zeigt, in vertikaler und eventuell zusätzlich in horizontaler Richtung versetzt, so kommt beim Einkuppeln die Leitfläche 19 des höherliegenden Kupplungsteiles 9a mit der Anschlagfläche bzw. -kante 24 am Auslegersteg 22 des Basiseiles 11 des tieferliegenden Kupplungsteiles 9b in Eingriff. Durch die schräge Leitfläche 19 wird das höherliegende Kupplungsteil nach unten bzw. das tieferliegende Kupplungsteil nach oben in fluchtende Ausrichtung ihrer Mittellinien 9′ gezogen, so daß wie beschrieben gekuppelt werden kann. Bei gleichzeitiger horizontaler Versetzung findet ggf. noch einer der in Fig.9 bzw. 10 beschriebenen Korrekturbewegungen statt.

Zum manuellen Lösen der Kupplung reicht es, wenn mit zwei Fingern einer Hand jeweils auf die Lösehebel 16 (Fig.7) gedrückt und gleichzeitig einer der Transporteinheiten ein kleiner Stoß versetzt wird.

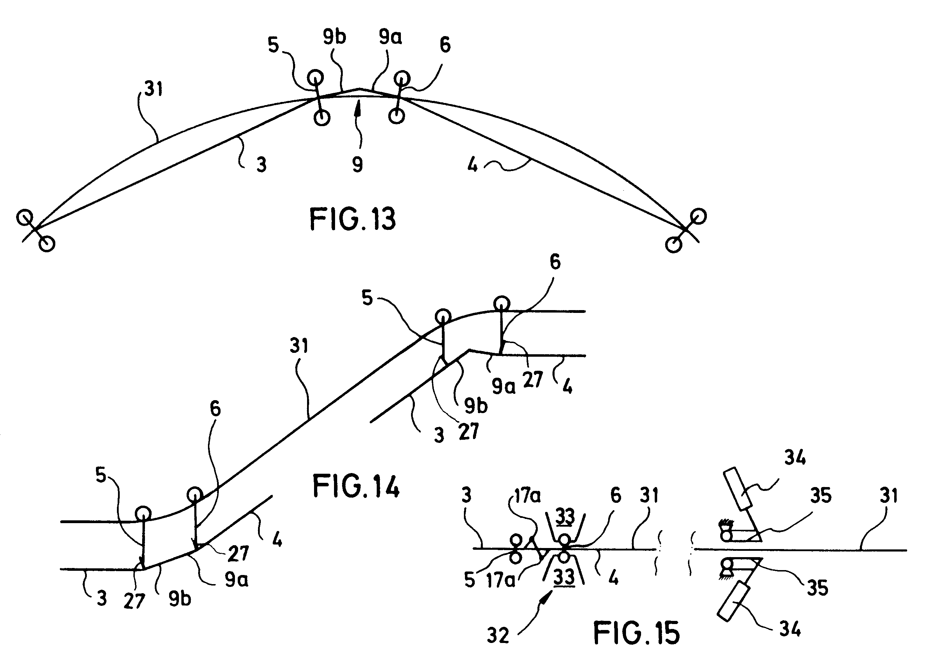

Soll an vorbestimmter Stelle in einem Schienenweg automatisch entkuppelt werden, so kann, wie Fig.15 zeigt, an dieser Stelle eine Zwangsführung 32, beispielsweise für die obere Verlängerung 17a des Betätigungsteiles 17, vorgesehen werden, die eine Bewegung des Betätigungsteiles 17 in Richtung auf die Mittellinie 9′ des zugeordneten Kupplungsteiles 9a bzw. 9b bewirkt. Eine solche Zwangsführung kann beispielsweise aus Nocken 33 gebildet sein, die beidseitig der Kupplung 9 in den Weg des Betätigungsteiles 17 ragen. Hinter der Entkupplungsstelle könnte sich ein leichtes Gefälle anschließen, so daß jeder Zug von Transporteinheiten, der die Nocken 33 passiert, entkuppelt wird und die abgekuppelten Transporteinheiten gleichzeitig vereinzelt werden. Soll nicht jeder Zug, der die Entkupplungsstelle passiert, entkuppelt werden, so würden sich z.B. durch einen Steuerkolben 34 ansteuerbare, schwenkbar gelagerte Nocken 35 anbieten, die nach Bedarf in den Weg der Betätigungsteile 17 eingeschwenkt und aus ihm zurückgezogen werden können.

Zur Vermeidung eines ungewollten Einkuppelns zweier sich im Schienenweg befindlichen Transporteinheiten, kann eines der einander zugewandten Kupplungsteile 9a in die in Figur 12 gezeigte Sperrstellung verschwenkt werden. Zu diesem Zweck wird der Haken 10 um seine Drehachse 12 gegen die Kraft der Feder 13 soweit verschwenkt, bis die untere Verlängerung 17b des Betätigungsteiles 17 über den Rastnocken 26 (vgl. auch Figur 5) geführt ist. Dabei kann entweder der Rastnocken 26 oder die untere Verlängerung 17b des Betätigungsteiles 17 elastisch ausgebildet sein, so daß eine solche Bewegung möglich ist. Hinter dem Rastnocken 26 kommt die untere Verlängerung 17b an einer Fläche zur Ruhe, die einen kleineren Abstand zur Drehachse 12 aufweist als der Rastnocken. In dieser Sperrstellung weist die Hakenöffnung 10a unkuppelbar in Richtung auf die zugeordnete Quertraverse und sperrt dabei ihre Nabe gegen den Eingriff der anderen Hakenöffnung. Selbst wenn sich das gegenüberliegende Kupplungsteil 9b noch in einer kupplungsfähigen Stellung befindet, kann doch keine Kupplung stattfinden, da der Haken 10 des Kupplungsteiles 9b unwirksam an die Rückseite des Hakens 10 des Kupplungsteiles 9a prallt.

Nachfolgend werden weiterhin verschiedene Betriebszustände des erfindungsgemäßen Fördersystems beschrieben:
Wie Figur 7 zeigt, befinden sich im eingekuppelten Zustand die beiden Leitflächen 23 der Auslegerstege 22 in einem sich parallel zur Mittellinie 9′ erstreckenden Abstand zueinander. Das gleiche gilt für die nicht sichtbaren Kanten 25a der Anschlagflächen 25. Darüberhinaus ist aus Figur 3 ersichtlich, daß die Naben 14 in den gegenseitigen Hakenöffnungen 10a mit einem Spiel in Richtung der Mittellinie 9′ aufgenommen sind, das dem Abstand $s_1$ entspricht. Daraus ergibt sich ein geradliniges Relativspiel in Richtung der Mittellinien 9′ zwischen den Kupplungsteilen 9a und 9b in eingekuppeltem Zustand. Dieses Relativspiel dient dazu, die aufzubringende Beschleunigungskraft beim Anfahren eines aus mehreren Transporteinheiten bestehenden Zuges zu verringern. Dies ist insbesondere bei solchen Hängefördersystemen vorteilhaft, bei denen ein Zug auch von Hand bewegt werden muß. Durch das Spiel wird zunächst die Haftreibung der ersten Transporteinheit überwunden, bevor die nächste der angekuppelten Transporteinheiten in Bewegung gesetzt werden muß usw.. Das beschriebene Spiel wird im Schub überwunden, indem sich sowohl die Kanten 25a der Anschlagflächen 25 als auch die Leitflächen 23 als auch die Naben 14 der beiden Kupplungsteile gegeneinander legen und eine lineare Kraftübertragung in Richtung der Mittellinie 9′ auch im Schub gewährleistet. Im Zug wird die Förderkraft durch die sich gegenseitig an die Naben anlegenden Hakenspitzen übertragen.

Das beschriebene Spiel in Richtung der Mittellinie 9′ und die Tatsache, daß der Haken 10 niedriger als der Zwischenraum zwischen dem oberen und dem unteren Steg 11a, 11b des Basisteiles führt darüberhinaus zu einem begrenzten Kippspiel, das eine Kippbewegung der beiden Kupplungsteile 9a, 9b relativ zueinander in einer vertikalen Ebene erlaubt, wobei die beiden Mittellinien 9′ der beiden Kupplungsteile 9a, 9b einen vertikalen Winkel miteinander einschließen. Zum Erleichtern des Kippens ist die Anschlagfläche 25, wie Figur 4 zeigt, abgeschrägt.

Durch den in Figur 3 dargestellten Abstand $s_1$ ist weiterhin auch ein horizontales Schwenkspiel zwischen den beiden Kupplungsteilen 9a, 9b vorhanden, das eine Verschwenkung der beiden Kupplungsteile 9a, 9b in einer horizontalen Ebene gestattet, wobei die beiden Mittellinien 9′ einen horizontalen Winkel miteinander einschließen.

Schwenkspiel und Kippspiel dienen zusammen mit der anhand Figur 6 beschriebenen, im wesentlichen starren Verbindung des Basisteiles 11 mit den Rollen des Betriebsmittels der verbesserten Kurvengängigkeit. Beim Durchfahren horizontaler Kurven gemäß Fig. 13 sind die Drehachsen der Rollen der Betriebsmittel bestrebt, sich radial zum Kurvenmittelpunkt auszurichten. Da zwischen den Rollen und der Quertraverse über die Öffnung 29 nur eine lose Verbindung besteht, können sich die Rollen ohne weiteres durch eine Relativdrehung von Rollen und Basisteil um die Achse 6′ gegenüber der Quertraverse in der angegebenen Richtung ausrichten, während sich die Quertraversen als Sehnen durch die Kurven legen. Wenn zunächst angenommen werden soll, daß zwischen den Kupplungsteilen kein Spiel besteht, so wird die Kupplung 9 bestrebt sein, sich mit zueinander ausgerichteten Mittellinien 9′ ebenfalls als Sehne in den Kurvenbogen legen, wobei die Mittellinien 9′ mit den Mittellinien 3′ bzw. 4′ einen Winkel einschließen. Die durch die Kupplung 9 gebildete Sehne zwischen den beiden Betriebsmitteln ist jedoch kürzer als die Quertraversen, so daß bereits dabei die Vorteile der erfindungsgemäßen Ausgestaltung gegenüber dem Stand der Technik deutlich wird. Insbesondere haben die gekuppelten Quertraversen in seitlicher Richtung einen wesentlich größeren Abstand, so daß beispielsweise Kleiderbügel auch in engen Kurven nicht aneinander anstoßen können. Darüberhinaus kann sich das Betriebsmittel durch das beschriebene geringe Spiel zwischen den Ösen 27 und 28 um einen geringen Betrag um die vertikale Symmetrieachse 6′ gegenüber dem Kupplungsteil drehen, so daß die dadurch erzielbare Ausrichtung der Rollen bei normalen Kurvenradien bereits ausreichen, um ein ruckfreies Durchfahren der Kurven zu ermöglichen. Noch besser wird die Kurvengängigkeit durch das beschriebene Schwenkspiel der beiden Kupplungsteile 9a, 9b in horizontaler Richtung, durch das die Rollen eine weitere Bewegungsmöglichkeit erhalten, sich radial zum Kurvenmittelpunkt auszurichten. Diese Ausrichtmöglichkeiten der Rollen der Betriebsmittel sind sowohl bei Zugbetrieb als auch im Schub gegeben, da die um ihre gegenseitigen Drehachsen greifenden Hakenöffnungen eben nur das durch den Abstand $s_1$ vorgegebene Schwenkspiel gestatten und darüberhinaus starr wirken. Eine unerwünschte Auslenkbewegung durch Schub im zweiten Gelenk zwischen dem Basisteil und der zugeordneten Quertraverse wird durch die im wesentlichen starre Verbindung des Basisteils mit den Rollen des Betriebsmittels verhindert, die ihrerseits durch die Laufschiene zwangsgeführt sind.

Beim Durchfahren vertikaler Kurven gemäß Figur 14 ist beim Übergang von einer Geraden in eine Steigung bzw. einem Gefälle in eine Gerade eine Verlängerung der Kupplung erforderlich, um den von der Kupplung gegenüber den Rollen vergrößerten Laufradius auszugleichen. Dies wird einerseits dadurch erreicht, daß sich die Quertraverse als Sehne in den Kurvenbogen legt, wobei die Öse 28 des Betriebsmittels um die Achse 27′ der Befestigungsöse 27 am Betriebsmittel verschwenkt. Im Bereich der Kupplung kann das lineare Spiel aus Figur 7 voll zur Verlängerung der Kupplung 9 ausgezogen werden. Durch die nur lose Verbindung zur Quertraverse kann sich auch das Basisteil 11 mitsamt der Befestigungsöse 27 um die Achse 27′ gegenüber der Quertraverse verkippen. Dadurch ist es möglich, daß die Betriebsmittel die Kurve in etwa senkrechter Abhängung durchfahren, was ein Klemmen der Rollen und somit eine ruckartige Förderbewegung verhindert.

Beim Übergang von einer Steigung in eine Gerade bzw. einer Geraden in ein Gefälle wird die erforderliche Verkürzung des Laufweges dadurch erreicht, daß sich die Quertraverse als Sehne an den Kurvenbogen legt, während die Betriebsmittel um die Achse 27′ verschwenkt werden. Im Bereich der Kupplung wird das Spiel in Förderrichtung zwischen den Kupplungsteilen 9a und 9b durch Zusammenfahren dieser Kupplungsteile bis zum Anschlagen insbesondere der Anschlagflächen 25 aneinander beseitigt, wobei beide Kupplungsteile 9a, 9b gegeneinander verkippt werden, so daß ihre Mittellinien 9′ einen vertikalen Winkel zwischen sich einschließen. Die Kippbewegung wird durch die abgeschrägte Anschlagfläche 25 erleichtert. Darüberhinaus ist auch die bereits beschriebene Verkippung der Basisteile gegenüber der Quertraverse möglich. Auf diese Weise wird auch bei derartigen vertikalen Kurven ein im wesentlichen ruckfreies Durchfahren ermöglicht.

Aus den Erläuterungen wird deutlich, daß sich das erfindungsgemäße Fördersystem beim Durchlaufen der Kurven im Schubbetrieb nicht wesentlich anders verhalten wird als beim Durchlaufen der Kurven im Zugbetrieb. Durch die wechselseitig um die Naben greifenden Haken der Kupplungsteile wirkt die Kupplung selbst-stabilisierend, d.h., Abwinklungen im Schubbetrieb wird durch ein Drehmoment entgegengewirkt. Durch zweckmäßige Bemessung des Spiels wird dieser Effekt aufrechterhalten. So wurde in einem bevorzugten Ausführungsbeispiel für ein Hängefördersystem in Textilbetrieben ein Längsspiel von etwa 3 mm vorgesehen und die Höhe des Hakens zum Abstand der Stege des Basisteils so bemessen, daß die durch dieses Längsspiel gegebene Kippbewegung voll ausgenutzt werden kann. Für den Abstand $s_2$ wurde 1 mm gewählt. Durch das Spiel in der Kupplung sollte eine horizontale Verschwenkbarkeit zwischen den beiden Mittellinien 9′ um ca. 13° in beiden Richtungen erzielbar sein. Das Spiel zwischen der Öse des Betriebsmittels und der Befestigungsöse des Basisteils ist so bemessen, daß jedes Betriebsmittel um seine Symmetrieachse etwa 0,5° in beiden Richtungen verdrehbar ist. Damit ergibt sich eine maximale Abwinklungsfähigkeit im Kupplungsbereich von etwa 14°. Diese Abmessungen können jedoch selbstverständlich den Erfordernissen des speziellen Fördersystems angepaßt werden.

Die Radien vertikaler Kurven betragen ca. 1 000 mm. Es können Steigungen von ca. 50% durchfahren werden.

Basisteil und Haken der Kupplung werden aus einem Kunststoff gespritzt, der die notwendige Elastizität und Widerstandsfähigkeit gegen das Aufeinanderprallen der Kupplungteile aufweist. Als bevorzugter Kunststoff wird Polyäthylen oder Polyoxymethylen (POM) verwendet.

In Abwandlung des beschriebenen und gezeichneten Ausführungsbeispieles kann die Erfindung nicht nur in einem Hängefördersystem sondern auch in anderen Fördersystemen Anwendung finden. Wenn eine Kupplungssymmetrie nicht erforderlich ist, so können die Haken auch in vertikaler Richtung gegeneinander gerichtet angeordnet sein. Es ist weiterhin möglich, die Haken auch entfernt von der Nabe angeordnete Rastteile am gegenüberliegenden Kupplungsteil umgreifen zu lassen.

## Patentansprüche

1. Fördersystem, insbesondere Hängefördersystem, mit einer Mehrzahl von auf Rollen (7, 8) verfahrbaren Transporteinheiten (1, 2), die untereinander durch jeweils eine lösbare Kupplung (9) verbunden sind, wobei die Kupplung (9) zwei identisch ausgebildete Haken (10) mit einer Hakenöffnung (10a) enthält, und wobei einer der Haken (10) an der einen zu kuppelnden Transporteinheit (1) und der andere der Haken an der anderen zu kuppelnden Transporteinheit (2) derart angeordnet ist, daß ihre Hakenöffnungen (10a) einander zugewandt sind, wobei jeder Haken (10) federbelastet mittels einer Nabe (14) um eine Drehachse (12) schwenkbar gelagert ist, die als Rastteil (14) dient, das in eingekuppeltem Zustand von der Hakenöffnung (10a) des dieser Transporteinheit (2, 1) nicht zugeordneten Hakens (10) umgreifbar ist, **dadurch gekennzeichnet, daß** jeder Haken (10) um die Drehachse (12) schwenkbar an einem ihm zugeordneten Basisteil (11) angeordnet ist, daß das Basisteil (11) über eine zweite, im wesentlichen lotrechte Drehachse (6') mit der Transporteinheit (1, 2) verbunden ist und daß das Basisteil (11) und die Rollen (7, 8) um eine im wesentlichen horizontale, quer zur Förderrichtung verlaufende Achse (27') relativ zueinander verdrehbar sind.

2. Fördersystem nach Anspruch 1, **dadurch gekennzeichnet, daß** die erste Drehachse (12) im wesentlichen lotrecht verläuft.

3. Fördersystem nach Anspruch 2, **dadurch gekennzeichnet, daß** die ersten Drehachsen (12) einer Kupplung (9) die gleiche Anordnung bezüglich einer Mittellinie (3', 4') der zugeordneten Transporteinheiten (1, 2) aufweisen.

4. Fördersystem nach einem der Ansprüche 1 bis 3, **dadurch gekennzeichnet, daß** jeder Haken (10) zum selbsttätigen Einkuppeln eine Auflauffläche (15) aufweist, die an einer Stirnfläche des Hakens (10) ausgebildet ist und von der Hakenöffnung (10a) schräg in Richtung auf die benachbarte Transporteinheit (1, 2) verläuft, wobei die Auflaufflächen (15) beider Haken (10) einer Kupplung (9) zum Verschwenken der Haken (10) beim selbsttätigen Einkuppeln miteinander in Eingriff bringbar sind.

5. Fördersystem nach einem der Ansprüche 1 bis 4, **dadurch gekennzeichnet, daß** jeder Haken (10) an der der Hakenöffnung (10a) abgewandten Seite der ersten Drehachse (12) mit einem Lösehebel (16) zum Lösen der Kupplung (9) versehen ist.

6. Fördersystem nach Anspruch 5, **dadurch gekennzeichnet, daß** der Lösehebel (16) mit einem Betätigungsteil (17) zum Eingriff in eine von der Kupplung (9) passierbare Führung zum selbsttätigen Lösen der Kupplung (9) versehen ist.

7. Fördersystem nach einem der Ansprüche 5 und 6, **dadurch gekennzeichnet, daß** der Lösehebel (16) zum selbsttätigen Lösen der Kupplung (9) durch eine Entkupplungsvorrichtung ansteuerbar ist.

8. Fördersystem nach einem der Ansprüche 1 bis 7, **dadurch gekennzeichnet, daß** jedem Haken (10) eine erste, in Richtung auf den anderen Haken (10) der Kupplung (9) weisende Leitfläche (23) zugeordnet ist, die sich schräg bezüglich einer vertikalen Ebene durch eine Mittellinie (3', 4') der Transporteinheit (1, 2) in Richtung auf die andere Transporteinheit (1, 2) erstreckt und vom Haken (10) wegführt, wobei die ersten Leitflächen (23) der beiden Haken (10) einer Kupplung (9) zum Ausgleich horizontaler Versetzungen beim Einkuppeln miteinander in Eingriff bringbar sind.

9. Fördersystem nach einem der Ansprüche 1 bis 8, **dadurch gekennzeichnet,** daß jedem Haken (10) eine erste, in Richtung auf den gegenüberliegenden Haken (10) der Kupplung (9) weisende Anschlagfläche (25) zugeordnet ist, wobei die ersten Anschlagflächen (25) beider Haken (10) einer Kupplung (9) zur Begrenzung ihrer Relativbewegung in Förderrichtung miteinander in Eingriff bringbar sind.

10. Fördersystem nach einem der Ansprüche 1 bis 9, **dadurch gekennzeichnet,** daß jedem Haken (10) eine zweite Leitfläche (19) und eine zweite Anschlagfläche (24) zugeordnet sind, die einen vertikalen Abstand zueinander aufweisen, daß zumindest die zweite Leitfläche (19) gegenüber einer horizontalen Ebene schräg in Richtung auf den anderen Haken (10) geneigt ist, wobei die zweite Leitfläche (19) eines Hakens (10) zum Ausgleich vertikaler Versetzungen beider Haken (10) einer Kupplung (9) beim Einkuppeln in Eingriff mit der zweiten Anschlagfläche (24) des anderen Hakens bringbar ist.

11. Fördersystem nach einem der Ansprüche 1 bis 10, **dadurch gekennzeichnet,** daß jede Hakenöffnung (10a) das Rastteil (14) mit spiel in Förderrichtung umgreift.

12. Fördersystem nach einem der Ansprüche 1 bis 11, **dadurch gekennzeichnet,** daß jede Hakenöffnung (10a) das Rastteil (14) mit Kippspiel in einer im wesentlichen vertikalen Ebene umgreift.

13. Fördersystem nach einem der Ansprüche 1 bis 12, **dadurch gekennzeichnet,** daß jede Hakenöffnung (10a) das Rastteil (14) mit Schwenkspiel in einer im wesentlichen horizontalen Ebene umgreift.

14. Fördersystem nach einem der Ansprüche 1 bis 13, **dadurch gekennzeichnet,** daß die jedem Haken (10) benachbarten Rollen (7, 8) insoweit starr mit dem Basisteil (11) verbunden sind, daß sie mit Ausnahme eines Spiels nur zusammen mit dem Basisteil (11) um die zweite Drehachse (6') verdrehbar sind.

15. Fördersystem nach einem der Ansprüche 1 bis 14, **dadurch gekennzeichnet,** daß das Basisteil (11) den Haken (10) mit einem oberen (11a) und einem unteren (11b) Steg gabelförmig umgreift.

16. Fördersystem nach den Ansprüchen 8-10 und 15, **dadurch gekennzeichnet,** daß die erste Leitfläche (23) und die erste und zweite Anschlagfläche (19, 24) am basisteil (11) und die zweite Leitfläche (19) am Haken (10) angeordnet ist.

17. Fördersystem nach einem der Ansprüche 1 bis 16, **dadurch gekennzeichnet,** daß jeder Haken (10) in eine Sperrstellung überführbar ist.

18. Fördersystem nach Anspruch 17, **dadurch gekennzeichnet,** daß die Sperrstellung durch einen Rasteingriff des Hakens (10) mit einem Rastnocken (26) am Basisteil (11) gebildet ist.

19. Fördersystem nach einem der Ansprüche 1 bis 18, **dadurch gekennzeichnet,** daß der Haken (10) und das Basisteil (11) aus Kunststoff gefertigt sind.

20. Fördersystem nach einem der Ansprüche 1 bis 19, **dadurch gekennzeichnet,** daß die zweite lotrechte Drehachse als fest mit dem Basisteil (11) verbundener Schaft (27a) einer Befestigungsöse (27) ausgebildet ist, in die eine mit den Rollen (7, 8) verbundene Öse (28) eingreift, wobei sich der Schaft (27a) durch eine Öffnung (29) in der Quertraverse (3, 4) hindurcherstreckt.

21. Fördersystem nach Anspruch 15 und 20, **dadurch gekennzeichnet,** daß einer der Stege (11a, 11b) des Basisteils (11) schmaler ist als die Öffnung (29).

**Claims**

1. A conveyor system, in particular a suspended conveyor system, with a plurality of transport units (1, 2), capable of running on rollers (7, 8), and connected to one another by a releasable coupling (9) having two identically shaped hooks (10) with jaws (10a), one of the hooks (10) being arranged on one of the transport units to be coupled (1) and the other hook being arranged on the other transport unit to be coupled (2) so that the hook jaws (10a) are facing one another, each hook (10) being mounted so that it is capable of pivoting about a hinge axis (12) in a spring-loaded manner by means of a hub (14) which serves as a latch part (14) which in the coupled condition can be clasped by the jaw (10a) of the hook (10) belonging to the other transport unit (2, 1), characterized in that each hook (10) is mounted on a respective base part (II) so that it is capable of pivoting about the hinge axis (12), in that the base part (II) is connected to the transport unit (1, 2) by a second, essentially vertical hinge (6'), and in that the base part (II) and the rollers (7, 8) are capable of twisting relative to one another about an essentially horizontal axis (27') extending at right angles to the conveying direction.

2. Conveyor system according to Claim 1, characterized in that the axis of the first hinge (12) extends in an essentially vertical direction.

3. Conveyor system according to Claim 2, characterized in that the axes of the first hinges (12) of a coupling (9) have the same arrangement with respect to a centreline (3', 4') of their respective transport units (1, 2).

4. Conveyor system according to one of Claims 1 to 3, characterized in that, for automatic coupling, each hook (10) possesses a bumping face (15) formed on an end face of the hook (10) and extending obliquely from the hook jaw (10a) towards the adjacent transport unit (1, 2) so that the bumping faces (15) of the two hooks (10) of a coupling (9) can be brought into engagement with one another to cause the hooks (10) to pivot, with automatic coupling.

5. Conveyor system according to one of Claims 1 to 4, characterized in that each hook (10) is provided with a release lever (16) on the side of the first hinge (12) furthest away from the hook jaw (10a), for releasing the coupling (9).

6. Conveyor system according to Claim 5, characterized in that the release lever (16) is provided with an actuating part (17) for engaging a guide which can be overridden by the coupling (9) for automatic release of the coupling (9).

7. Conveyor system according to one of Claims 5 and 6, characterized in that the release lever (16) can be triggered by an uncoupling device for automatic release of the coupling (9).

8. Conveyor system according to one of Claims 1 to 7, characterized in that each hook (10) possesses a first guide face (23) facing towards the other hook (10) of the coupling (9), extending obliquely with respect to a vertical plane through a centreline (3', 4') of the transport unit (1, 2) towards the other transport unit (1, 2) and away from the hook (10), so that the first guide faces (23) of the two hooks (10) of a coupling (9) can be brought into engagement to correct horizontal misalignments when coupling.

9. Conveyor system according to one of Claims 1 to 8, characterized in that each hook (10) possesses a first stop face (25) facing towards the opposing hook (10) of the coupling (9), so that the first stop faces (25) of the two hooks (10) of a coupling (9) can be brought into engagement to limit their relative movement in the conveying direction.

10. Conveyor system according to one of Claims 1 to 9, characterized in that each hook (10) possesses a second guide face (19) and a second stop face (24) with a vertical gap between them, that at least the second guide face (19) slopes obliquely towards the other hook (10) with respect to a horizontal plane, the second guide face (19) of a hook (10) being capable of being brought into engagement with the second stop face (24) of the other hook to correct vertical misalignments of the two hooks (10) of a coupling (9) when coupling.

11. Conveyor system according to one of Claims 1 to 10, characterized in that each hook jaw (10a) clasps the latch part (14) with play in the conveying direction.

12. Conveyor system according to one of Claims 1 to 11, characterized in that each hook jaw (10a) clasps the latch part (14) with tilting play in an essentially vertical plane.

13. Conveyor system according to one of Claims 1 to 12, characterized in that each hook jaw (10a) clasps the latch part (14) with pivoting play in an essentially horizontal plane.

14. Conveyor system according to one of Claims 1 to 13, characterized in that the degree of rigidity of the connection of the rollers (7, 8) adjacent to each hook (10) with the base part (11) is such that, apart from a certain play, the rollers can be pivoted about the second hinge axis (6') only in combination with the base part (11).

15. Conveyor system according to one of Claims 1 to 14, characterized in that the base part (11) is forked, with an upper leg (11a) and a lower leg (11b) which clasp the hook (10).

16. Conveyor system according to Claims 8-10 and 15, characterized in that the first guide face (23) and the first and second stop faces (19, 24) are located on the base part (11) and the second guide face (19) is located on the hook (10).

17. Conveyor system according to one of Claims 1 to 16, characterized in that each hook (10) can be switched to an inoperative position.

18. Conveyor system according to Claim 17, characterized in that the inoperative position is set by a catching engagement of the hook (10) with a catch cam (26) on the base part (11).

19. Conveyor system according to one of Claims 1 to 18, characterized in that the hook (10) and base part (11) are made of plastic.

20. Conveyor system according to one of Claims 1 to 19, characterized in that the second vertical hinge axis is formed as a shank (27a) of an attachment-eye (27) rigidly connected to the base part (11), with an eye (28) connected to the rollers (7, 8) engaging in the said attachment-eye (27), the shank (27a) extending through an opening (29) in the tie-bar (3, 4).

21. Conveyor system according to Claims 15 and 20, characterized in that one of the legs (11a, 11b) of the base part (11) is narrower than the opening (29).

## Revendications

1. Système convoyeur, en particulier système convoyeur aérien, comprenant une pluralité d'unités de transport (1, 2) déplaçables sur des galets (7, 8) et respectivement reliées entre elles par un dispositif d'accouplement (9) détachable, le dispositif d'accouplement (9) comprenant deux crochets (10) identiques avec une ouverture de crochet (10a), les deux crochets (10) étant montés, l'un sur l'une des unités de transport (1) à accoupler et l'autre sur l'autre unité de transport (2) à accoupler, de manière que leurs ouvertures de crochet (10a) sont dirigées l'une vers l'autre, chaque crochet (10) étant commandé par ressort et pouvant être pivoté à l'aide d'un moyeu (14) autour d'un axe de rotation (12) qui sert d'élément d'arrêt (14) qui, à l'état d'accouplement, peut être enveloppé par l'ouverture (10a) du crochet (10) non associé à cette unité de transport (2, 1), **caractérisé en ce** que chaque crochet (10) est monté de manière à pouvoir pivoter autour de l'axe de rotation (12) sur un élément de base (11) qui lui est associé, que l'élément de base (11) est rattaché à l'unité de transport (1, 2) par l'intermédiaire d'un second axe de rotation (6') sensiblement vertical, et que l'élément de base (11) et les galets (7, 8) peuvent être tournés les uns par rapport aux autres autour d'un axe (27') sensiblement horizontal orienté transversalement à la direction de transport.

2. Système convoyeur selon la revendication 1, caractérisé en ce que le premier axe de rotation (12) s'étend sensiblement dans le sens vertical.

3. Système convoyeur selon la revendication 2, caractérisé en ce que les premiers axes de rotation (12) d'un dispositif d'accouplement (9) présentent la même disposition par rapport à une ligne médiane (3', 4') des unités de transport (1,2) associées.

4. Système convoyeur selon l'une des revendications 1 à 3, caractérisé en ce que chaque crochet (10) comprend pour l'accouplement automatique une surface d'arrêt (15) qui est conformée sur une face frontale du crochet (10) et s'étend à partir de l'ouverture de crochet (10a) en oblique en direction de l'unité de transport (1, 2) voisine, les surfaces d'arrêt (15) des deux crochets (10) d'un dispositif d'accouplement (9) pouvant être mises en prise l'une avec l'autre pour le pivotement des crochets (10) lors de l'accouplement automatique.

5. Système convoyeur selon l'une des revendications 1 à 4, caractérisé en ce que chaque crochet (10) est muni, du côté du premier axe de rotation (12) opposé à l'ouverture de crochet (10a), d'un levier de déclenchement (16) pour le détachement du dispositif d'accouplement (9).

6. Système convoyeur selon la revendication 5, caractérisé en ce que le levier de déclenchement (16) comporte un élément de manoeuvre (17) pour l'engagement dans un guidage pour le détachement automatique du dispositif d'accouplement (9) franchissable par ledit dispositif d'accouplement (9).

7. Système convoyeur selon l'une des revendications 5 et 6, caractérisé en ce que le levier de déclenchement (16) pour le détachement automatique du dispositif d'accouplement (9) peut être commandé par un dispositif de désaccouplement.

8. Système convoyeur selon l'une des revendications 1 à 7, caractérisé en ce qu'à chaque crochet (10) est associée une première surface de guidage (23) qui est dirigée vers l'autre crochet (10) du dispositif d'accouplement (9) et s'étend en oblique par rapport à un plan vertical, en passant par une ligne médiane (3', 4') de l'unité de transport (1, 2), en direction de l'autre unité de transport (1, 2), et s'écarte du crochet (10), les premières surfaces de guidage (23) des deux crochets (10) d'un dispositif d'accouplement (9) pouvant être mises en prise l'une avec l'autre pour compenser des déports horizontaux lors de l'accouplement.

9. Système convoyeur selon l'une des revendications 1 à 8, caractérisé en ce qu'à chaque crochet (10) est associée une première surface d'arrêt (25) dirigée vers le crochet (10) opposé du dispositif d'accouplement (9), les premières surfaces d'arrêt (25) des deux crochets (10) du dispositif d'accouplement (9) pouvant être mises en prise l'une avec l'autre pour limiter leur mouvement relatif dans la direction de transport.

10. Système convoyeur selon l'une des revendications 1 à 9, caractérisé en ce qu'à chaque crochet (10) sont associées une seconde surface de guidage (19) et une seconde surface d'arrêt (24) qui se situent à une distance verticale l'une par rapport à l'autre, qu'au moins la seconde surface de guidage (19) est inclinée par rapport à un plan horizontal en direction de l'autre crochet (10), la seconde surface de guidage (19) d'un crochet (10) pouvant être mise en contact avec la seconde surface d'arrêt (24) de l'autre crochet pour compenser, lors de l'accouplement, des déports verticaux des deux crochets (10) d'un dispositif d'accouplement (9).

11. Système convoyeur selon l'une des revendications 1 à 10, caractérisé en ce que chaque ouverture de crochet (10a) enveloppe l'élément d'arrêt (14) avec jeu dans la direction de transport.

12. Système convoyeur selon l'une des revendications 1 à 11, caractérisé en ce que chaque ouverture de crochet (10a) enveloppe l'élément d'arrêt (14) avec jeu de basculement dans un plan sensiblement vertical.

13. Système convoyeur selon l'une des revendications 1 à 12, caractérisé en ce que chaque ouverture de crochet (10a) enveloppe l'élément d'arrêt (14) avec jeu de pivotement dans un plan sensiblement horizontal.

14. Système convoyeur selon l'une des revendications 1 à 13, caractérisé en ce que les galets (7, 8) avoisinant chaque crochet (10) sont solidarisés avec l'élément de base (11) en ce sens que, à l'exception d'un jeu, ils ne peuvent être tournés autour du second axe de rotation (6') que conjointement avec l'élément de base (11).

15. Système convoyeur selon l'une des revendications 1 à 14, caractérisé en ce que l'élément de base (11) entoure le crochet (10) à la manière d'une fourche avec une barrette supérieure (11a) et une barrette inférieure (11b).

16. Système convoyeur selon l'une des revendications 8 à 10 et 15, caractérisé en ce que la première surface de guidage (23) et les première et deuxième surfaces d'arrêt (19, 24) sont disposées sur l'élément de base (11) et que la seconde surface de guidage (19) est disposée sur le crochet (10).

17. Système convoyeur selon l'une des revendications 1 à 16, caractérisé en ce que chaque crochet (10) peut être amené dans une position de verrouillage.

18. Système convoyeur selon la revendication 17, caractérisé en ce que la position de verrouillage est réalisée par un verrouillage du crochet (10) avec une came d'arrêt (26) sur l'élément de base (11).

19. Système convoyeur selon l'une des revendications 1 à 18, caractérisé en ce que le crochet (10) et l'élément de base (11) sont réalisés en matière plastique.

20. Système convoyeur selon l'une des revendications 1 à 19, caractérisé en ce que le second axe de rotation vertical est conformé en une tige (27a) d'un oeillet de fixation (27), solidaire de l'élément de base (11), dans lequel s'engage un oeillet (28) relié aux galets (7, 8), la tige (27a) s'étendant au travers d'une ouverture (29) ménagée dans la traverse (3, 4).

21. Système convoyeur selon les revendications 15 et 20, caractérisé en ce que l'une des barrettes (11a, 11b) de l'élément de base (11) est plus étroite que l'ouverture (29).

FIG.1

FIG. 2

FIG. 3

FIG. 4

FIG. 5

14

FIG.6

FIG.7

FIG.8

FIG.9

FIG.10

FIG. 11

FIG. 12

EP 0 338 100 B1

FIG.13

FIG.14

FIG.15